# EUROPÄISCHE PATENTSCHRIFT

(11) **EP 0 361 291 B1**
(45) Veröffentlichungstag und Bekanntmachung des Hinweises auf die Patenterteilung: **06.12.1995**
(21) Anmeldenummer: 89117358.5
(22) Anmeldetag: 20.09.1989
(51) Int. Cl.: A47B 57/42, B65G 1/04

(54) **Kragarm-Regal**
Shelf with cantilever brackets
Rayonnage à consoles

(30) Priorität: 24.09.1988 DE 3832537
(43) Veröffentlichungstag der Anmeldung: 04.04.1990
(73) Patentinhaber: Hölscher, Ottokar, Dipl.-Ing., D-50858 Köln (DE)
(72) Erfinder: Hölscher, Ottokar, Dipl.-Ing., D-50858 Köln (DE)
(74) Vertreter: Mey, Klaus-Peter, Dr.-Ing. Dipl.-Wirtsch.-Ing.

(56) Entgegenhaltungen:
- EP-A- 0 061 514
- WO-A-88/06018
- DE-A- 2 406 049
- DE-A- 3 235 767
- GB-A- 856 482
- GB-A- 2 150 817

## Beschreibung

Die Erfindung betrifft ein Kragarm-Regal gemäß dem Oberbegriff des Anspruchs 1.

Aus der EP-A-0 061 514 ist ein derartiges Kragarm-Regal für Langgutprodukte wie Bretter, Rohre, Profileisen und dergleichen bekannt, bei welchem für einen besonders stabilen Aufbau Profilständer und Kragarme Doppel-T-Profile sind und am Ende jedes Kragarmes eine Fußplatte befestigt ist, deren oberes Ende die Haken trägt. Bei diesem Regal kann das Ein- bzw. Aushängen von Kragarmen immer nur unter einem bestimmten Winkel erfolgen. Zum Auswechseln oder zusätzlichem Anbringen eines Kragarmes müssen daher unter bestimmen Bedingungen, d.h. bei großer Länge und/oder geringer Abstandshöhe, die darüber befindlichen Arme mit den darauf liegenden Lasten bei entsprechendem Arbeits- und Zeitaufwand vorher entfernt werden.

Das Dokument DE-A-3 235 767 betrifft einen Bausatz für Regale, insbesondere zur Lagerung sperriger Körper, bestehend aus Hauptelementen in Form von Rechteckrahmen sowie Verbindungselementen in Form von Längs- und/oder Querstreben sowie Zwischenböden. Bei diesem bestehen sowohl Pfosten und Holme der Rechteckrahmen als auch die Streben aus Blechprofilen, die für die Pfosten beispielsweise im Querschnitt G-förmig und für die Holme z.B. im Querschnitt C-förmig ausgebildet sind. Dabei weisen einerseits die Pfosten der Rechteckrahmen sowie andererseits die Längs- und Querstreben oder Fachböden Kupplungselemente zur Herstellung von lösbaren Halteverbindungen auf. Es ist vorgesehen, daß die Enden der im Querschnitt beispielsweise C-förmigen Holme sowohl am waagerechten Steg als auch an beiden senkrechten Schenkeln je mit einer vorspringenden Nase versehen sind und dabei wenigstens die an den Schenkeln vorgesehenen Nasen hakenartige Gestalt haben, daß die Pfosten nahe ihren Enden in wenigstens einer der schmalen Profilwandungen einen waagerechten und zwei senkrechte Eingriffsschlitze für die Nasen der Holme aufweisen und daß die Holme und die Pfosten über an der Innenseite der Pfosten mit den hakenartigen Nasen in Steckeingriff bringbare, gabelartige Klemmstücke formschlüssig miteinander verriegelbar und/oder gegeneinander verspannbar sind.

Der vorliegenden Erfindung liegt, ausgehend von einem Stand der Technik entsprechend der vorgenannten EP-A-0 061 514 die Aufgabe zu Grunde, den Anschluß eines Stahlprofil-Kragarmes an einen Stahlprofil-Ständer neu zu gestalten und zu verbessern, um ein besonders einfach montier- und und variierbares Kragarm-Regal für schwere Lasten zu schaffen, bei dem insbesondere das Ein- bzw. Aushängen der Kragarme erheblich erleichtert wird.

Diese Aufgabe wird erfindungsgemäß bei einem Kragarm-Regal für Langgutprodukte der im Oberbegriff von Anspruch 1 angegebenen Art dadurch gelöst, daß in die Ausstanzungen die Haken horizontal einbringbar und mittels Sicherungselementen arretierbar sind, wobei die Sicherungselemente als Arretierplatten mit einer rechteckigen Öffnung ausgebildet und mit dieser über jeweils durch die Ausstanzungen hindurchgesteckte Haken bringbar und hinter diesen absenkbar sind, derart, daß sich die Sicherungselemente jeweils zwischen den Haken und dem T-Profilständer befinden und die Ausstanzungen überragen, und wobei die Querschnitte der Ausstanzungen, der Haken und der Sicherungselemente formmäßig einander angepaßt sind. Es ist ersichtlich, daß durch den neu gestalteten Anschluß eines Stahlprofil-Kragarmes an einem Stahlprofil-Ständer nach der Erfindung das ein Ein- und Aushängen der Kragarme erheblich erleichtert wird, weil diese zum Auswechseln immer nur horizontal eingebracht werden müssen. Die Erfindung zeichnet sich demnach durch besondere Einfachheit und Zweckmäßigkeit bei kostengünstiger Ausbildung der vorgeschlagenen Lösung aus. Weiterhin wird durch die formmäßige Anpassung der Ausstanzungen, Haken und Sicherungselemente eine hohe Lagestabilität gewährleistet.

Mit besonderem Vorteil sind die Sicherungselemente ein- oder beidseitig mit Klebemittel beschichtet, wodurch die Betriebssicherheit wesentlich erhöht wird, indem ein Verrutschen der Sicherungselemente - verbunden mit einer eventuellen Freigabe des Kragarms - vermieden wird.

Mit großem Vorteil ist die Innenseite des Flansches im Bereich um die Ausstanzungen mit Klebemittel beschichtet. Mit dieser Maßnahme wird die Betriebssicherheit weiter verbessert.

Damit ein guter Sitz des Kragarmes am Profilständer erzielt wird, ist zweckmäßigerweise der Abstand zwischen der gegen die Innenseite des Flansches anliegenden Seite des Hakens und der gegen die Außenseite des Flansches anliegenden Seite der Fußplatte im wesentlichen gleich der Dicke des Flansches zuzüglich der Dicke des Sicherheitselementes. Hierdurch werden Toleranzen vermieden, die zu einem unstabilen Aufbau führen können.

Weitere Einzelheiten, Merkmale und Vorteile der Erfindung ergeben sich aus der nachstehenden Erläuterung eines in den Zeichnungen schematisch dargestellten Ausführungsbeispieles.

Es zeigen:
- Fig. 1: eine perspektivische Ansicht eines Kragarm-Regals,
- Fig. 2: eine schematische Seitenansicht der Verbindung eines Kragarmes mit einem Ständer und geschnittenem Sicherungselement,
- Fig. 3: eine perspektivische Darstellung einer Sicherungsplatte.

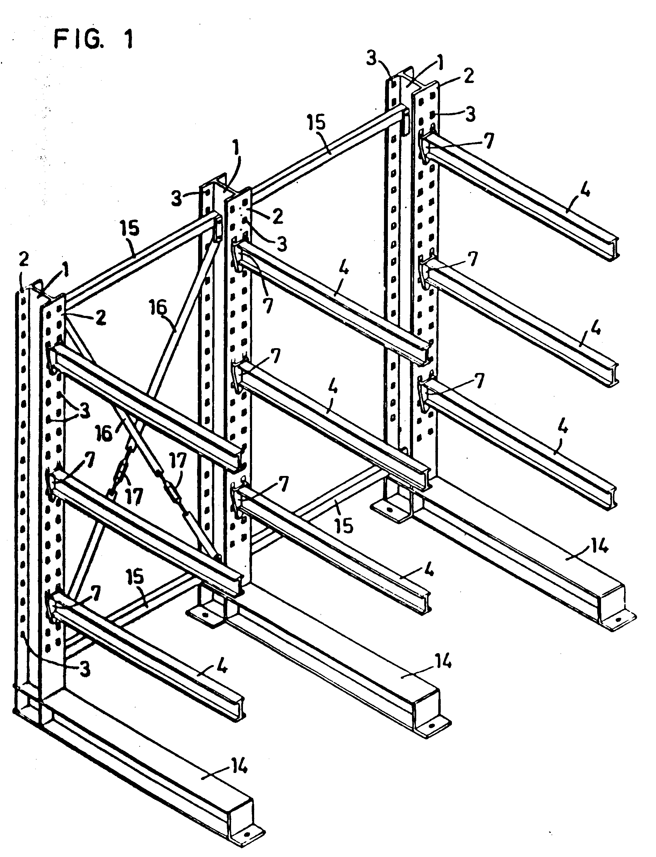

Das erfindungsgemäße Kragarm-Regal weist mehrere T-Profilständer (1) auf, zumindest zwei Ständer für ein Regal. Die Anzahl der Ständer ist jedoch beliebig. Die T-Profilständer können in gleichen oder ungleichen Abständen angeordnet sein. Beim dargestellten Ausführungsbeispiel gemäß Figur 1 sind diese T-Profilständer als Doppel-T-Profilständer ausgebildet. In den Flanschen (2) der Profilständer (1) sind Paare von Öffnungen bzw. Ausstanzungen (3) angeordnet. Die Ausstanzungen (3) eines jeden Paares liegen in gleicher Höhe und sind im Abstand voneinander übereinander in den Flanschen (2) angeordnet. Diese Ausstanzungspaare (3) können in einem Flansch (2) oder in beiden Flanschen des Doppel-T-Trägers vorhanden sein. Die Ausstanzungen (3) können beliebige Form haben, beispielsweise vierkant, rund oder oval sein.

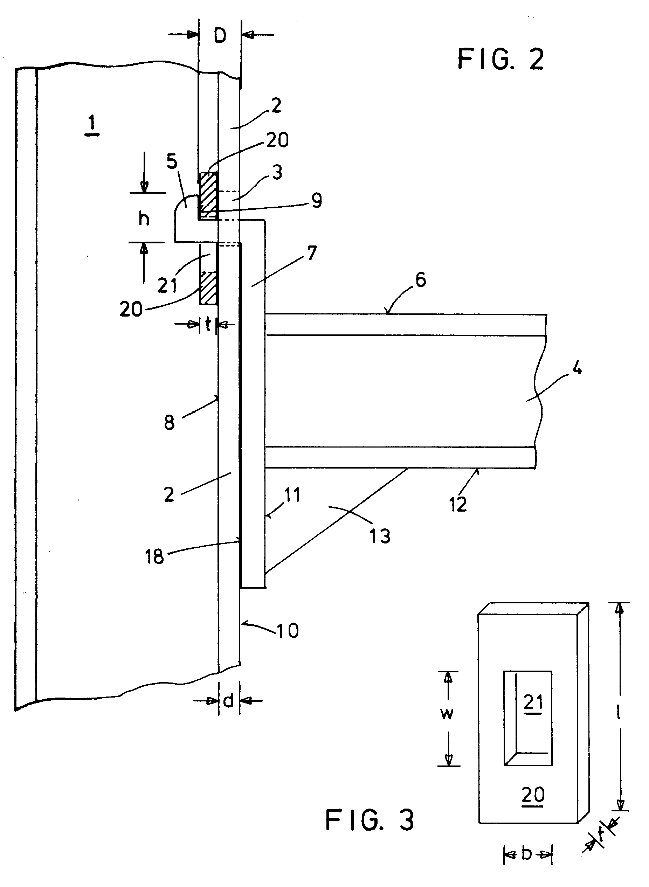

Wie aus Figur 2 erkennbar, weisen die in die Ausstanzungen (3) einzuhängenden Kragarme (4) an einem Ende Krallen bzw. Haken (5) auf, mit denen sie in lösbarer Weise in je ein Paar Ausstanzungen (3) einhängbar sind. Es ist ersichtlich, daß in einfacher Weise beliebig viele Kragarme in einen Ständer eingehängt werden können, und zwar in vorbestimmten und gewünschten Höhen, und daß gegebenenfalls in einfachster Weise Höhenveränderungen der Kragarme vorgenommen werden können. Die Haken (5) erstrecken sich gegenüber der Oberseite (6) eines Kragarmes (2) in bekannter Weise nach oben.

In die Ausstanzungen (3) sind die Haken (5) erfindungsgemäß horizontal einbringbar und mittels Sicherungselementen (20) arretierbar. Vorzugsweise sind die Sicherungselemente (20) als Arretierplatten mit einer Öffnung (21) ausgebildet. Gemäß Figur 3 ist die lichte Weite der Öffnung (21) mit (w) bezeichnet und die Breite mit (b). Die Länge (l) der Arretierplatte (20) ist im allgemeinen beliebig, während die Weite (w) immer größer sein muß als die Höhe (h) des Hakens (5), gleiches gilt bezüglich der Breite (b). Zweckmäßigerweise sind die Querschnitte der Ausstanzungen (3), der Haken (5) und der Sicherungselemente (20) formmäßig einander angepaßt.

Am Ende des Kragarmes (4) ist ferner eine Fußplatte (7) befestigt, die am Kragarm (4) beispielsweise angeschweißt sein kann. Eine gute Abstützung des Kragarmes am Profilständer (1) wird dadurch erzielt, daß die Höhe der Fußplatte (7) größer ist als die Höhe des Kragarmes (4). Um einen guten Sitz des Kragarmes (4) am Profilständer (1) zu erzielen, wird der Aufbau so gestaltet, daß der Abstand (D) zwischen der gegen die Innenseite (8) des Flansches (2) anliegenden Seite (9) des Hakens (5) und der gegen die Außenseite (10) des Flansches (2) anliegenden Seite (18) der Fußplatte (7) im wesentlichen gleich der Dicke (d) des Flansches (2) zuzüglich der Dicke (t) des Sicherungselementes (20) ist. Um die Stützverbindung weiterhin zu verbessern, kann die Vorderseite (11) der Fußplatte (7) mit der Unterseite (12) des Kragarmes (2) mittels eines Stützdreieckes (13) verbunden sein. Am unteren Ende der Profilständer (1) sind Stützfüße (14) befestigt. Zwischen den Profilständern (1) können Distanzstücke (15) und Diagonalspannverbände (16) mit Spannschrauben (17) angeordnet sein.

Zur Montage eines Kragarms (4) an einem Ständer (1) werden die zwei Haken (5) durch die Ausstanzungen (3) in den Flanschen (2) horizontal hindurchgesteckt. Die Sicherungsplatten (20) werden sodann von hinten mit ihren Öffnungen (21) über die Haken (5) gebracht und dahinter abgesenkt. Die oberen Stege der Sicherungsplatten (20) verschließen damit die Aussparungen (3) und verhindern ein unbeabsichtigtes Lösen der Verbindung zwischen Kragarm (4) und Ständer (1). Ein Lösen der Verbindung, beispielsweise zum Wechseln eines Kragarms (4), geschieht analog in umgekehrter Reihenfolge. Das erfindunsgemäße Regal läßt sich mit geringem Arbeitsaufwand leicht verändern und entstehenden Forderungen auf einfachste Weise anpassen. Die Montage und die Demontage ist außerordentlich einfach und kann von ungeschultem Personal durchgeführt werden.

Die erfindungsgemäßen Maßnahmen sind nicht auf das in den Zeichnungsfiguren dargestellte Ausführungsbeispiel beschränkt. So können beispielsweise, ohne den Rahmen der Erfindung zu verlassen, die Sicherungselemente und ihre Öffnung eine beliebige Form aufweisen und bezüglich der gewünschten Dicke als dünne Platten auch mehrfach übereinander liegen. Beispielsweise können die Sicherungselemente auch U-förmig mit nach unten gerichteten Schenkeln ausgebildet sein. Die jeweilige konstruktive Ausgestaltung ist in Anpassung an die spezielle Verwendung der Vorrichtung dem Fachmann anheimgestellt.

## Patentansprüche

1. Kragarmregal für Langgutprodukte wie Bretter, Rohre, Profileisen und dgl., mit Ständern (1) und sich von diesen aus erstreckenden Kragarmen (4), wobei in den Ständern (1) Ausstanzungen (3) und an den Kragarmen (4) zwei L-förmig nach oben gebogene, sich über die Oberseite (6) des Kragarmes (4) hinaus erstreckende Haken (5) zum lösbaren Einhängen in die Ausstanzungen (3) vorgesehen sind und am Ende jedes Kragarmes (4) eine Fußplatte (7) befestigt ist, wobei die Ständer (1) als T-Profilständer ausgebildet sind und in den Flanschen (2) der T-Profilständer (1) die Ausstanzungen (3) paarweise im Abstand voneinander in gleicher Höhe übereinander angeordnet sind, **dadurch gekennzeichnet**, daß in die Ausstanzungen (3) die Haken (5) horizontal einbringbar und mittels Sicherungselementen (20) arretierbar sind, wobei die Sicherungselemente (20) als Arretierplatten mit einer rechteckigen Öffnung (21) ausgebildet und mit dieser über jeweils durch die Ausstanzungen (3) hindurchgesteckte Haken (5) bringbar und hinter diesen absenkbar sind, derart, daß sich die Sicherungselemente (20) jeweils zwischen den Haken (5) und dem T-Profilständer (1) befinden und die Ausstanzungen (3) überragen, und wobei die Querschnitte der Ausstanzungen (3), der Haken (5) und der Sicherungselemente (20) formmäßig einander angepaßt sind.

2. Kragarmregal nach Anspruch 1, daduch gekennzeichnet, daß die Sicherungselemente (20) ein- oder beidseitig mit Klebemittel beschichtet sind.

3. Kragarmregal nach Anspruch 1 oder 2, dadurch gekennzeichnet, daß die Innenseite (8) des Flansches (2) im Bereich um die Ausstanzungen (3) mit Klebemittel beschichtet ist.

4. Kragarmregal nach einem der Ansprüche 1 bis 3, dadurch gekennzeichnet, daß der Abstand (D) zwischen der gegen die Innenseite (8) des Flansches (2) anliegenden Seite (9) des Hakens (5) und der gegen die Außenseite (10) des Flansches (2) anliegenden Seite (18) der Fußplatte (7) im wesentlichen gleich der Dicke (d) des Flansches (2) zuzüglich der Dicke (t) des Sicherheitselementes (20) ist.

## Claims

1. Cantilever-bracket shelf unit for lengthy products such as boards, pipes, iron sections and the like, including uprights (1) and cantilever brackets (4) extending out therefrom, wherein there are provided cut-outs (3) in the uprights (1) and two L-shaped hooks (5) on the cantilever brackets (4), which hooks extend above the upper surface (6) of the cantilever bracket (4) and are curved upwardly for releasably hanging the brackets in the cut-outs (3) and a base plate (7) is attached to the end of each cantilever bracket (4), wherein the uprights (1) are constructed as T-section uprights and the cut-outs (3) are disposed above one another at the same height in spaced pairs in the flanges (2) of the T-section uprights (1), characterised in that, the hooks (5) can be introduced horizontally into the cut-outs (3) and then retained by means of securing elements (20), wherein the securing elements (20) are constructed as retaining plates including a rectangular opening (21) and they can be placed over the hooks respectively extending through the cut-outs (3) by virtue of the openings and lowered behind them in such a way that the respective securing elements (20) are located between the hooks (5) and the T- section uprights (1) and that they extend beyond the cut-outs (3) and wherein the cross-sections of the cut-outs (3), the hooks (5) and the securing elements (20) are all matched in shape.

2. Cantilever-bracket shelf unit in accordance with Claim 1, characterised in that, the securing elements (20) are coated on one or both sides with an adhesive means.

3. Cantilever-bracket shelf unit in accordance with Claim 1 or 2, characterised in that, the inner surface (8) of the flange (2) is coated with an adhesive means in the region surrounding the cut-outs (3).

4. Cantilever-bracket shelf unit in accordance with any of the Claims 1 to 3, characterised in that, the spacing (D) between the side (9) of the hook (5) which is located opposite to the inner surface (8) of the flange (2) and the side (18) of the base place (7) which is located opposite to the outer surface (10) of the flange (2) is substantially equal to the thickness (d) of the flange (2) plus the thickness (t) of the securing element (20).

## Revendications

1. Rayonnage à consoles pour recevoir des produits longs tels que des planches, des tubes, des profilés métalliques etc., constitué de montants porteurs (1) d'où partent des consoles (4), les montants étant percés de découpes (3) tandis que les consoles (4) sont équipées de deux crochets (5) en forme de L dirigés vers le haut et dépassant la face supérieure (6) de chaque console (4) en permettant de suspendre cette console, de manière amovible, dans les découpes (3) des montants, chaque console (4) se terminant par une plaque d'embase (7), les découpes (3) pratiquées dans les flancs (2) des montants (1) à profilés en T étant groupées par paires à la même hauteur, les différentes paires étant espacées verticalement, rayonnage caractérisé en ce que :
- les crochets (5) peuvent être engagés horizontalement dans les découpes (3) et bloqués par des éléments de sécurité (20) constitués par des plaques d'arrêt percées d'une ouverture rectangulaire (21),
- les plaques peuvent, par leurs ouvertures, être passées sur les crochets (5) traversant les découpes (3), puis descendues derrière ces crochets de sorte que les éléments de sécurité (20) se trouvent placés entre les crochets (5) et les montants porteurs à profilés en T (1), en dépassant les découpes,
- les sections des découpes (3), des crochets (5) et des éléments de sécurité (20) ont des formes adaptées les unes aux autres.

2. Rayonnage à consoles selon la revendication 1, caractérisé en ce que les éléments de sécurité (20) sont recouverts sur une ou deux faces, d'un agent de collage.

3. Rayonnage à consoles selon la revendication 1 ou 2, caractérisé en ce que la face interne (8) du flanc (2) dans la zone entourant les découpes (3) est recouverte d'un agent de collage.

4. Rayonnage à consoles selon l'une des revendications 1 à 3, caractérisé en ce que la distance (D) entre la face (9) du crochet (8) en contact avec la face interne (8) du flanc (2), et la face (18) de la plaque d'embase (7) en contact avec la face externe (10) du flanc (2) est sensiblement égale à l'épaisseur (d) du flanc (2) augmentée de l'épaisseur (t) de l'élément de sécurité (20).
